# EUROPEAN PATENT SPECIFICATION

(11) **EP 3 189 910 B1**
(45) Date of publication and mention of the grant of the patent: **13.10.2021**
(21) Application number: 15838736.5
(22) Date of filing: 27.08.2015
(51) Int. Cl.: B21K 1/32, B21B 5/00, B21H 1/06, B21J 5/02, F01D 5/02, F02C 7/00, B21K 21/06, B21K 1/76

(54) **MANUFACTURING METHOD FOR RING FORMED BODY**
HERSTELLUNGSVERFAHREN FÜR EINEN RINGFORMKÖRPER
PROCÉDÉ DE FABRICATION POUR UN CORPS DE FORME ANNULAIRE

(30) Priority: 01.09.2014 JP 2014177026
(43) Date of publication of application: 12.07.2017
(73) Proprietor: Hitachi Metals, Ltd., Tokyo 108-8224 (JP)
(72) Inventor: ISHIWARI, Yuji, Okegawa-shi Saitama 363-8510 (JP); OHSONE, Jun, Okegawa-shi Saitama 363-8510 (JP)
(74) Representative: HGF
(86) International application number: PCT/JP2015/074182
(87) International publication number: WO 2016/035664

(56) References cited:
- JP-A- H0 615 401
- JP-A- S62 286 640
- JP-A- 2011 056 548
- US-A- 4 084 419
- US-A- 4 860 567
- US-A1- 2014 157 851
- DATABASE WPI Week 201127 Thomson Scientific, London, GB; AN 2011-D52146 XP002779095, -& CN 101 966 554 A (ZHOU Z) 9 February 2011 (2011-02-09)

## Description

### TECHNICAL FIELD

The present invention relates to a ring molded article manufacturing method in which forging is used.

### BACKGROUND ART

For example, in an engine used for an aircraft or the like, a plurality of turbine disks are arranged side by side such that their center axes are positioned along one another, and a plurality of turbine blades are attached to each turbine disk so as to be apart from one another in a direction of a circumference of each turbine disk. In particular, in an engine used in an aircraft, high-temperature and high-pressure combustion gas, which is generated inside the engine, flows in a direction of the center axes from a front stage side of the turbine disks toward a rear stage side thereof, on peripheral portions of the turbine disks, and thus, the turbine disks, together with the turbine blades, rotate at a high speed around their center axes. The driving force generated by this rotation is transmitted to a compressor and fans which are located on the front stage side of the turbine disks in the direction of the center axes, and compressed air necessary for continuous combustion of the gas, and propulsion are thus obtained.

Generally, a turbine disk is produced by an operation in which a molding article formed in a substantially ring-like shape (hereinafter referred to as a "ring molded article"), is subjected to cutting or the like. In this ring molded article, typically, convex portions respectively protrude on both sides of the ring molded article in a direction of a center axis thereof, and furthermore, the convex portions extend in a direction of a circumference of the ring molded article.

An outer periphery of the turbine disk is exposed to combustion gas, and a temperature thereat becomes as high as approximately 600 degrees C to 700 degrees C. Meanwhile, a temperature at an inner periphery thereof is lower than that at the outer periphery. Thermal stress is generated in an inside of this turbine disk because the engine is repeatedly started and stopped. Therefore, it is desired for the turbine disk to have excellent low cycle fatigue characteristics. Furthermore, centrifugal force is applied to the outer periphery of the turbine disk according to a high-speed rotation around the axis thereof at high temperatures. Therefore, it is desired for the turbine disk to further have a high creep strength characteristic. In addition, it is desired for the turbine disk to have a high tensile strength and a high yield strength. Therefore, it is desired for the ring molded article used in the turbine disks, to have a sufficiently high mechanical strength appropriate for the above desires.

Accordingly, in an example of a ring molded article manufacturing method, the following is performed to secure mechanical strengths of a ring molded article. A cylindrical billet is processed by first forging so as to be pressed by two molds from a direction of a center axis of the billet, and a first forged article which is formed in a disc-like shape, is thus produced. The first forged article is drilled such that a through hole in an axial direction of the forged article is formed, and a drilled article is thus produced. The drilled article is processed by ring rolling, and a material which is formed in a substantially ring-like shape (hereinafter referred to as a "ring material"), is thus produced. Next, the ring material is placed inside the two molds on which concave portions corresponding to the convex portions of the ring molded article are formed respectively, and the ring material is then subjected to second forging so as to be sandwiched and pressed between the two molds. In the second forging process, the ring material in the form of fluid fills in the concave portions of the two molds to form the convex portions of the ring molded article, and the ring molded article is thus obtained (for example, see Patent Literatures 1 and 2). In the second forging, strain is imparted to the ring molded article, the crystal grains which form the ring molded article, are thus refined, and thereby, mechanical strengths, such as a tensile strength and a fatigue strength, can be in particular improved. For equipment used for the second forging, a hydraulic-control forging press machine which can strictly control a speed of the forging, has often been used. In addition, the ring molded articles produced by the example of the above manufacturing method, have often been used for producing large turbine disks. A further example of a ring molded article manufacturing method is provided in JPH 06-015401 A1, where a ring molded article manufacturing method according to the preamble of claim 1 is described in detail.

### CITATION LIST

### PATENT LITERATURE

Patent Literature 1: JP S52-131967 A
Patent Literature 2: JP 2011-079043 A

### SUMMARY OF INVENTION

### TECHNICAL PROBLEM

However, in the above example of the ring molded article manufacturing method, it is necessary to remove a large amount of the material of the first forged article to form a through hole in the first forged article which is formed in a cylindrical shape. This causes a problem in a view of efficiently producing the ring molded article.

In addition, regarding the second forging process, it becomes difficult to impart strain to a surface region of the ring material which is in contact with the molds, particularly in an initial stage of the second forging, because the material adheres to the molds. Furthermore, in the second forging process, a temperature of the surface region of the ring material which is in contact with the molds, is decreased in comparison with a temperature of a central region of the ring material according to influence from heat release to the mold which is primarily made of a metal. According to these factors, a region of the ring molded article corresponding to the surface region which is in contact with the mold particularly at the initial stage of the second forging, may have a rough structure in comparison with the structure of the central region of the ring molded article, and thus, it becomes difficult for this region to obtain desired mechanical characteristics. The above region is known as a "dead metal" region. It is desired to avoid this dead metal remaining in a region of the ring molded article which is used as a turbine disk (hereinafter referred to as a "turbine disk region"). To prevent the turbine disk region from including the dead metal region, an excess portion of the ring molded article is previously provided such that a thickness thereof is increased, and the excess portion is then removed by a cutting after the second forging.

However, in the above example of the ring molded article manufacturing method, at start of the second forging and at the initial stage of the second forging, the ring material, which is placed inside the two molds, is in contact with an entirety of regions which range from an opening of the concave portion of the mold to both inner peripheral and outer peripheral sides of the concave portion, respectively. As a result, it becomes difficult to impart strain to a wide range of the surface region of the ring material, a temperature in a wide range of the surface region of the ring material may easily decrease, and thus, the dead metal regions may be increased in the ring molded article which is produced in the above manner. It is necessary to increase an amount of the excess portions of the ring molded article corresponding to the dead metal regions and then remove large amounts of excess portions. Accordingly, it is desired to provide near-net-shape forging in which the dead metal regions can be reduced so that the excess portions can be reduced.

Furthermore, in the above example of the ring molded article manufacturing method, it is difficult for the ring material in the form of fluid to fill an inside of the concave portion of the mold in the second forging process, if the two convex portions of the ring molded article to be produced, are offset relative to each other in a radial direction of the ring molded article. As a result, it becomes difficult to form the convex portions of the ring molded article, it becomes difficult to produce the ring molded article, and thus, a problem arises.

The present invention has been made in consideration of the above-described circumstances, and an object of the present invention is to provide a ring molded article manufacturing method capable of reliably and efficiently producing a ring molded article in which dead metal regions are reduced.

### SOLUTION TO PROBLEM

To solve the above-described problem, according to a ring molded article manufacturing method in an aspect of the present invention, the method includes a step of performing first forging on a material such that the material is formed in a shape including a bottom which is formed in a disk shape, and a peripheral wall which is inclined to a direction from a center of the bottom toward an outer periphery thereof, in a direction from an outer periphery of the bottom toward one side in a direction of a center axis of the bottom, a step of drilling the bottom of a first forged article obtained by the step of performing the first forging, a step of ring-rolling a drilled article obtained by the step of drilling, and a step of producing a ring molded article in which a ring material obtained by the step of ring-rolling, is placed inside two molds, the ring material is then processed by second forging so as to be pressed by the two molds in a direction of a center axis of the ring material, and the ring molded article is thus produced. The method is characterised in that in the step of performing the first forging, if a one half section of the peripheral wall is divided into a one side region and an another side region in the direction of the center axis of the first forged article based on a middle of a maximum height of the first forged article in the direction of the center axis of the first forged article, a straight line passing through a center of gravity of the one side region and a center of gravity of the another side region is inclined by an angle relative to the center axis of the first forged article, of which a range is 7 degrees to 40 degrees.

### ADVANTAGEOUS EFFECTS OF INVENTION

According to the ring molded article manufacturing method in an aspect of the present invention, the ring molded article in which dead metal regions are reduced, can be reliably and efficiently produced.

### BRIEF DESCRIPTION OF DRAWINGS

[FIG. 1] FIG. 1 is a plan view schematically showing a ring molded article which is produced by a manufacturing method according to a First Embodiment of the present invention.
[FIG. 2] FIG. 2 is a half sectional view of the ring molded article which is produced by the manufacturing method according to the First Embodiment of the present invention.
[FIG. 3] FIG. 3 is a flow chart for explaining the manufacturing method according to the First Embodiment of the present invention.
[FIG. 4] FIG. 4 is a full sectional view schematically showing a billet to be subjected to rough forging in the manufacturing method according to the First Embodiment of the present invention.
[FIG. 5] FIG. 5 is a plan view schematically showing a rough-forged article made by rough forging in the manufacturing method according to the First Embodiment of the present invention.
[FIG. 6] FIG. 6 is a full sectional view schematically showing a drilled article made by a drilling process in the manufacturing method according to the First Embodiment of the present invention.
[FIG. 7] FIG. 7 is a diagram for explaining ring rolling in the manufacturing method according to the First Embodiment of the present invention.
[FIG. 8] FIG. 8(a) is a half sectional view schematically showing a condition of arrangement of a ring-rolled article immediately before start of finishing forging in the manufacturing method according to the First Embodiment of the present invention.
FIG. 8(b) is a half sectional view schematically showing a condition immediately after the finishing forging is completed.
[FIG. 9] FIG. 9 is a half sectional view schematically showing the ring-rolled article of FIG. 8(a).

### DESCRIPTION OF EMBODIMENTS

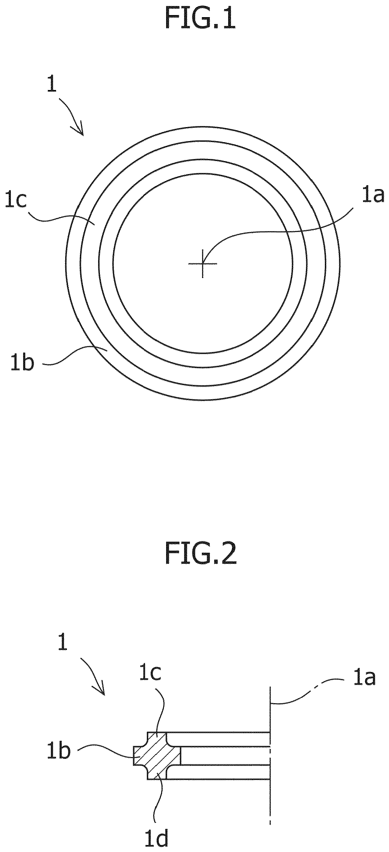

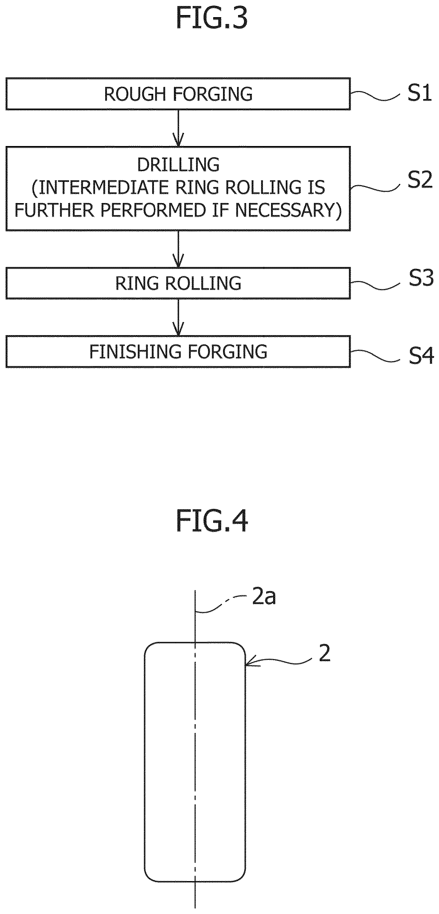

A method for manufacturing a ring molded article according to First to Third Embodiments of the present invention will be described below with reference to FIGs. 1 to 9. Note that in the First to Third Embodiments of the present invention, the following expressions are used for a section of an article which is substantially symmetric based on a center axis (hereinafter referred to as a "symmetric article"), and drawings which show such sections. Among sections obtained by cutting a symmetric article along a plane passing through the center axis, one of which will be referred to as a "half section", and a drawing, such as FIGs. 2, 8, and 9, showing this half section will be referred to as a "half sectional view". An entire section of a symmetric article obtained by cutting the symmetric article along a plane passing through the center axis will be referred to as a "full section", and a drawing, such as FIGs. 4 to 6, showing this full section will be referred to as a "full sectional view".

### First Embodiment

A ring molded article produced by a manufacturing method according to the First Embodiment of the present invention will be described below. A ring molded article is used for producing a turbine disk in an engine for an aircraft or the like. Furthermore, the turbine disk is produced by an operation in which a ring molded article after molding is processed by heat treatment, an operation in which an excess portion of a ring molded article is removed, and the like. Typically, a ring molded article is made of metals, and in the present Embodiment, a ring molded article is produced of Ni-base alloy718. However, the present invention is not limited to this. More specifically, any metal which enables manufacturing of a ring molded article having high strength at high temperatures, can be used. As an example, a ring molded article may be produced by using a Ni-base alloy, a Fe-base alloy, a Co-base alloy, or the like which has high strength at high temperatures.

As shown in FIGs. 1 and 2, the ring molded article includes a base portion 1b which is formed in a substantially ring-like shape around a center axis 1a thereof. The ring molded article 1 includes a one side convex portion 1c and an another side convex portion 1d which protrude from the base portion 1b on both sides of the ring molded article 1 in a center axis direction thereof, respectively. The two convex portions 1c and 1d are formed so as to extend in a direction of a circumference of the ring molded article 1. Note that in FIG. 2, the one side convex portion 1c and the another side convex portion 1d of the ring molded article 1 substantially coincide with each other in a radial direction of the ring molded article 1. However, in an alternative feature, the one side convex portion 1c and the another side convex portion 1d of the ring molded article 1 can be offset relative to each other in the radial direction of the ring molded article 1.

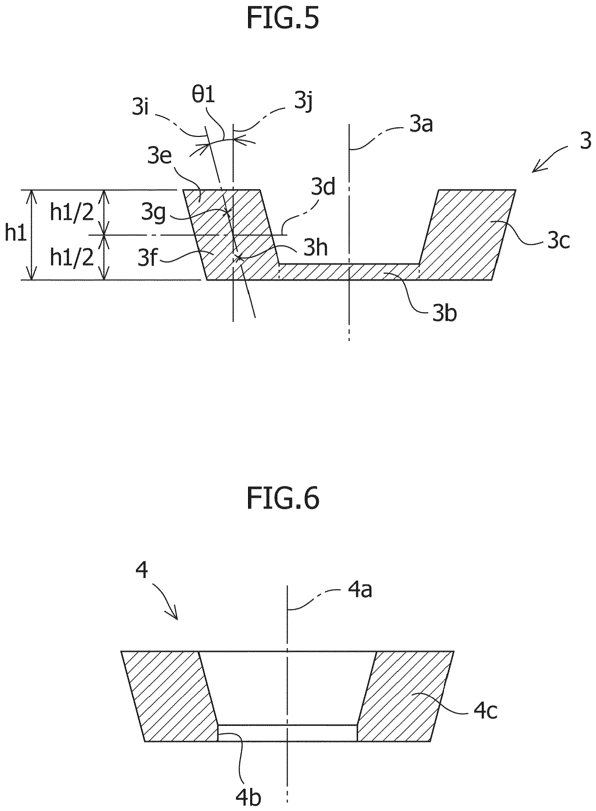

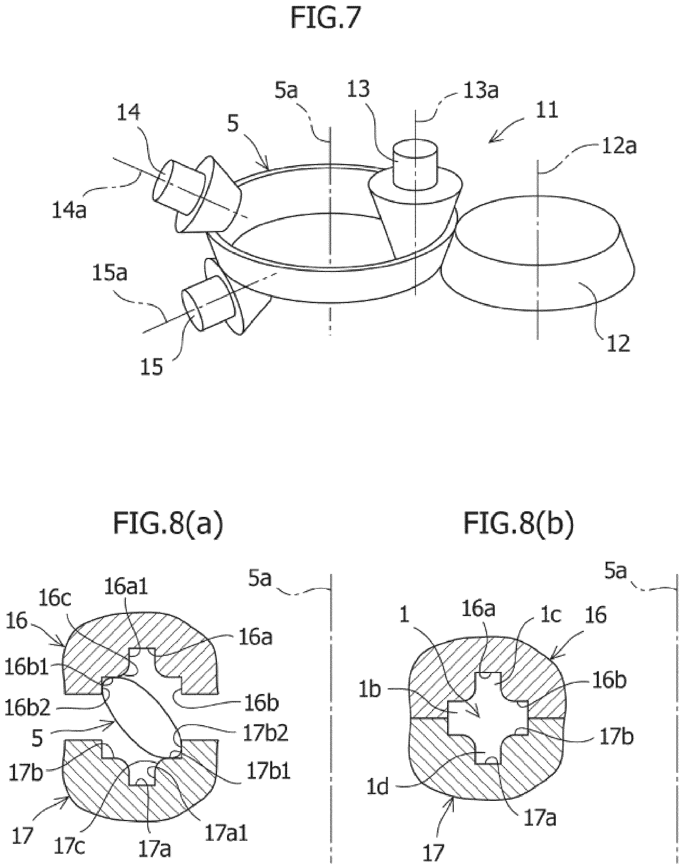

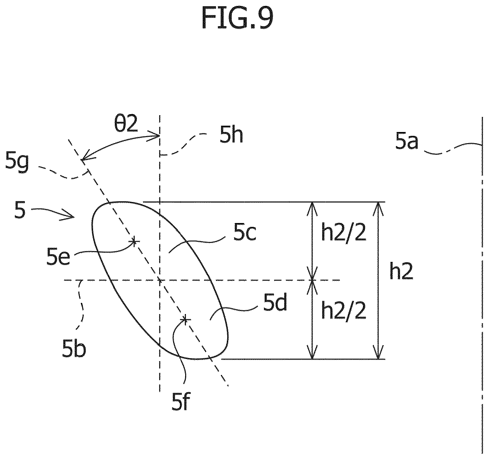

An outline of the above method for manufacturing the ring molded article 1 will be described with reference to FIG. 3. A billet 2 (shown in FIG. 4) is subjected to rough forging as first forging, and thus, a rough-forged article 3 (shown in FIG. 5) is produced as a first forged article (Rough forging step S1). The rough-forged article 3 is processed by drilling so that a drilled article 4 is made (shown in FIG. 6). Note that the drilled article 4 may be further processed by intermediate ring rolling if necessary (drilling step S2). The drilled article 4 is ring-rolled so that a ring-rolled article 5 (shown in FIGs. 8(a) and 9) configured as a ring material, is made (ring rolling step S3). The ring-rolled article 5 is processed by finish forging as second forging so that the above ring molded article 1 configured as a second forged article, is made (finishing forging step S4).

Details of each step in the method for manufacturing the ring molded article 1 will be described below.

### Regarding the rough forging step S1

Details of the rough forging step S1 will be described below. As shown in FIG. 4, the billet 2 formed in a substantially cylindrical shape around a center axis 2a as a material to be processed by rough forging, is produced by using Ni-base alloy718, and then, the billet 2 is pressed by using molds and the like so that the rough-forged article 3 shown in FIG. 5 is produced. As an example, if the billet 2 is to be produced by using Ni-base alloy718, it is preferable that a heating temperature for the billet 2 used in the rough forging step S1 be in a range of 900 degrees C to 1075 degrees C. However, the present invention is not limited to this. More specifically, if the billet 2 is to be produced by using a metal other than Ni-base alloy718, the heating temperature may be set so as to be adapted to rough forging which is performed on the above billet.

As shown in FIG. 5, the rough-forged article 3 is formed so as to include a bottom 3b which is formed in a substantially disc-like shape around a center axis 3a, and a peripheral wall 3c which is inclined to a direction from a center of the bottom 3b to an outer periphery thereof, in a direction from the center of the bottom 3b to one side of a center axis direction of the bottom 3b. Note that in FIG. 5, a broken line indicates a boundary between the bottom 3b and the peripheral wall 3c. In the drilling process described below, the bottom 3b is removed along the broken line. In the above rough-forged article 3, if a half section of the peripheral wall 3c is divided into a one side region 3e and an another side region 3f in a center axis direction of the rough-forged article 3 based on a middle line 3d for a maximum height h1 of the rough-forged article 3 in the center axis direction thereof, a straight line 3i which passes through a center of gravity 3g of the one side region 3e and a center of gravity 3h of the another side region 3f, is inclined by an angle θ1 relative to a parallel line 3j which is in parallel with the center axis 3a of the rough-forged article 3, i.e., relative to the center axis 3a of the rough-forged article 3. It is preferable that the angle θ1 be in a range which is 7 degrees to 40 degrees.

### Regarding drilling step S2

Details of the drilling step S2 will be described below. The rough-forged article 3 is processed by drilling, such as punching out with press working, cutting with a water cutter, or the like, such that the bottom 3b of the rough-forged article 3 shown in FIG. 5 is removed. As a result, the drilled article 4 including a through hole 4b which is formed along a center axis 4a, is produced as shown in FIG. 6. The drilled article 4 includes a peripheral wall 4c corresponding to the peripheral wall 3c of the rough-forged article 3. If necessary, the drilled article 4 may be processed by intermediate ring rolling.

### Regarding ring rolling step S3

The ring rolling step S3 will be described below. In the ring rolling step S3, as an example, a ring rolling apparatus 11 shown in FIG. 7 is used. The ring rolling apparatus 11 includes a main roll 12 which is located on an outer periphery side of the drilled article 4, and a mandrel roll 13 which is located on an inner periphery side of the drilled article 4. The outer peripheral surface of the main roll 12 and that of the mandrel roll 13 face each other. The main roll 12 is configured so as to be rotatable around a rotational axis 12a which passes through a center of the main roll 12 and extends substantially parallel with the center axis 4a of the drilled article 4. The outer peripheral surface of the main roll 12 is inclined so as to correspond to an outer peripheral surface of the ring-rolled article 5 to be produced. The mandrel roll 13 is also configured so as to be rotatable around a rotational axis 13a which passes through the center of the mandrel roll 13 and extends substantially in parallel with the center axis 4a of the drilled article 4. The outer peripheral surface of the mandrel roll 13 is inclined so as to correspond to an inner peripheral surface of the ring-rolled article 5 to be produced. However, the present invention is not limited to this. More specifically, the main roll and the mandrel roll may be formed in a substantially cylindrical shape and the rotational axis of the main roll and the mandrel roll may be respectively arranged so as to be inclined in correspondence with the outer peripheral surface and the inner peripheral surface in the ring-rolled article 5 to be produced. In addition, the ring rolling apparatus 11 includes a pair of axial rolls 14, 15 located on both sides of the drilled article 4 in a center axis direction thereof. An outer peripheral surface of the axial roll 14 and that of the axial roll 15 face each other. Each of the axial rolls 14, 15 is configured so as to be rotatable around a rotational axis 14a, 15a which passes through the center of the corresponding axial roll.

In the ring rolling step S3 in which the above ring rolling apparatus 11 is used, first, the drilled article 4 is charged into the ring rolling apparatus 11. As an example, if the drilled article 4 is to be produced by using Ni-base alloy718, it is preferable that a heating temperature for the drilled article 4 to be charged into the ring rolling apparatus 11, be in a range of 900 degrees C to 1050 degrees C. However, the present invention is not limited to this. More specifically, if the drilled article 4 is to be produced by using a metal other than Ni-base alloy718, the heating temperature may be set so as to be adapted to ring rolling performed on the above drilled article 4. The outer peripheral surface of the main roll 12 is brought into contact with the outer peripheral surface of the drilled article 4, the outer peripheral surface of the mandrel roll 13 is brought into contact with the inner peripheral surface of the drilled article 4, and furthermore, the outer peripheral surfaces of the axial roll pair 14, 15 are respectively brought into contact with both surfaces of the drilled article 4 in the center axis direction thereof. While the main roll 12 and the mandrel roll 13 are turned around the rotational axis 12a, 13a, respectively, the main roll 12 and the mandrel roll 13 sandwich and press the drilled article 4 in a radial direction of the drilled article 4. In addition, while the axial rollers 14, 15 are turned around the rotational axis 14a, 15a, respectively, the pair of axial rolls 14, 15 sandwich and press the drilled article 4 in the center axis direction of the drilled article 4. As a result, the ring-rolled article 5 is produced.

The ring-rolled article 5 is formed so as to be shaped in a substantially ring-like shape around a center axis 5a of the ring-rolled article 5, and a half section of the ring-rolled article 5 is formed so as to be inclined. More specifically, as shown in FIG. 9, if the half section of the ring-rolled article 5 is divided into a one side region 5c and an another side region 5d in a center axis direction of the ring-rolled article 5 based on a middle line 5b for a maximum height h2 of the ring-rolled article 5 in the center axis direction thereof, a straight line 5g which passes through a center of gravity 5e of the one side region 5c and a center of gravity 5g of the another side region 5d, is inclined by an angle θ2 relative to a parallel line 5h which is in parallel with the center axis 5a of the ring-rolled article 5, i.e., relative to the center axis 5a of the ring-rolled article 5. It is preferable that the angle θ2 be in a range of 7 degrees to 40 degrees. Furthermore, it is more preferable that the angle θ2 be in a range of 10 degrees to 25 degrees. This is because if the angle θ2 is in the above range, sufficient amount of strain can be imparted to the material in the finishing forging step S4 described below so that the material may be appropriate, particularly as a material for aircraft turbine disks. The angle θ2 in the one half section of the ring-rolled article 5 may be either the same as or different from the angle θ1 in the one half section of the peripheral wall 3c of the rough-forged article 3. If the angle θ2 is different from the angle θ1, the drilled article 4 may be ring-rolled such that the above angle is changed.

In addition, as an example, the outer peripheral surface of the ring-rolled article 5 may be formed in a substantially arc-like shape which protrudes from the inner periphery of the ring-rolled article 5 toward the outer periphery thereof. Furthermore, to form the outer peripheral surface of the ring-rolled article 5 which is formed in the substantially arc-like shape, the outer peripheral surface of the main roll 12 may be formed in a substantially arc-like shape which recesses from the inner periphery of the ring-rolled article 5 toward outer periphery thereof so as to correspond to the outer peripheral surface of the ring-rolled article 5. The inner peripheral surface of the ring-rolled article 5 may be formed in a substantially arc-like shape which protrudes from the outer periphery of the ring-rolled article 5 to the inner periphery thereof. Furthermore, to form the inner peripheral surface of the ring-rolled article 5 which is formed in the above-described substantially arc-like shape, the outer peripheral surface of the mandrel roll 13 may be formed in a substantially arc-like shape which recesses from the outer periphery of the ring-rolled article 5 to the inner periphery thereof so as to correspond to the inner peripheral surface of the ring-rolled article 5.

### Regarding finishing forging step S4

The finishing forging step S4 will be described below. In the finishing forging step S4, a one side mold 16 and an another side mold 17, shown in FIGs. 8(a) and 8(b), are used. The one side mold 16 includes a concave portion 16a which corresponds to the one side convex portion 1c of the ring molded article 1, and an opening side concave portion 16b which corresponds to the one side region in the base portion 1b of the ring molded article 1. The another side mold 17 includes a concave portion 17a which corresponds to the another side convex portion 1d of the ring molded article 1, and an opening side concave portion 17b which corresponds to the another side region of the base portion 1b of the ring molded article 1.

In the finishing forging step S4, the ring-rolled article 5 is placed in the above two molds 16, 17, and then, the ring-rolled article 5 is sandwiched and pressed by the two molds 16, 17 in a center axis direction of the ring-rolled article 5. As an example, if the ring-rolled article 5 is produced by using Ni-base alloy718, it is preferable that a heating temperature for the ring-rolled article 5 placed in the two molds 16, 17 be in a range of 900 degrees C to 1050 degrees C. However, the present invention is not limited to this. More specifically, if the ring-rolled article 5 is produced of a metal other than Ni-base alloy718, the heating temperature may be set to a temperature adapted to the finishing forging performed on the ring-rolled article 5.

In conditions in which the above ring-rolled article 5 is arranged, the ring-rolled article 5 is supported by a region which is located on the outer peripheral side from an outer peripheral side corner 16c in a concave portion 16a of the one side mold 16 (this region will be hereafter be referred to as an "outer peripheral side supporting region"), and a region which is located on the inner peripheral side from an inner peripheral side corner 17c in a concave portion 17a of the another side mold 17 (this region will be hereafter referred to as an "inner peripheral side supporting region") Note that the above expression "outer peripheral side corner 16c in the concave portion 16a" indicates a corner located between an outer peripheral surface 16a1 in the concave portion 16a of the one side mold 16 and an outer peripheral side bottom surface 16b1 in the opening side concave portion 16b thereof, and the above expression "inner peripheral side corner 17c in the concave portion 17a" indicates a corner located between an inner peripheral surface 17a1 in the concave portion 17a of the another side mold 17 and an inner peripheral side bottom surface 17b1 in the opening side concave portion 17b thereof. Furthermore, it is preferable that the ring-rolled article 5 be arranged so as to be apart from regions other than the outer peripheral side supporting region of the one side mold 16 and the inner peripheral side supporting region of the another side mold 17. In other words, both ends of the ring-rolled article 5 in a direction of the inclined straight line 5g are in contact with the two molds 16, 17, respectively, and the ring-rolled article 5 is restricted by the two molds 16, 17 in the center axis direction of the ring-rolled article 5 and in the radial direction of the ring-rolled article 5.

In particular, in the present Embodiment, as shown in FIG. 8(a), the ring-rolled article 5 is supported by the outer periphery side bottom surface 16b1 and the outer peripheral surface 16b2 in the opening side concave portion 16b of the one side mold 16 and the inner peripheral side bottom surface 17b1 and the inner peripheral surface 17b2 in the opening side concave portion 17b of the another side mold 17. Furthermore, it is preferable that the ring-rolled article be arranged so as to be apart from regions other than the outer periphery side bottom surface 16b1 and the outer peripheral surface 16b2 in the opening side concave portion 16b of the one side mold 16 and the inner peripheral side bottom surface 17b1 and the inner peripheral surface 17b2 in the opening side concave portion 17b of the another side mold 17.

Furthermore, in the finishing forging, the ring-rolled article 5 in the form of fluid fills the concave portion 16a and the opening side concave portion 16b of the one side mold 16 and the concave portion 17a and the opening side concave portion 17b of the another side mold 17. As a result, the ring molded article 1 is produced.

According to the above method for manufacturing the ring molded article 1 in the present Embodiment, the billet 2 is processed by the rough forging so as to be formed in a shape including the bottom 3b which is formed in the substantially cylindrical shape, and the peripheral wall 3c which is inclined to the direction from the center of the bottom 3b toward the outer periphery thereof, in the direction from the outer periphery of the bottom 3b toward the one side in the direction of the center axis of the bottom 3b, the rough-forged article 3 is thus produced, and the bottom 3b of the rough-forged article 3 is drilled. Furthermore, the ring-rolled article 5 is placed in the two molds 16, 17 on which the concave portions 16a, 17a respectively corresponding to the convex portions 1c, 1d of the ring molded article 1, the ring-rolled article 5 is then processed by the finishing forging so that the ring-rolled article 5 is pressed by the two molds 16, 17 in the direction of the center axis of the ring-rolled article 5, and the ring molded article 1 is thus produced. In particular, in the finishing forging step S4, when placing the ring-rolled article 5 in the two molds 16, 17, the ring-rolled article 5 is supported by the outer periphery side supporting region of the one side mold 16 and the inner peripheral side supporting region of the another side mold 17, and furthermore, the ring-rolled article 5 is arranged so as to be apart from the regions other than the outer periphery side supporting region of the one side mold 16 and the inner peripheral side supporting region of the other side mold 17. An outer peripheral shape of the rough-forged article 3 is tapered from a top thereof to the bottom 3b thereof, and dimension area of the bottom 3b can be reduced. As a result, an amount of the bottom 3b to be removed in the drilling step S2 can be reduced. Accordingly, the ring molded article 1 can be efficiently produced. In addition, in the finishing forging step S4, the contact area between the ring-rolled article 5 and the two molds 16, 17 can be reduced, and as a result, regions that the material of the ring-rolled article 5 adhere to the two molds 16, 17, can be reduced at the start of the finishing forging and the initial stage of the finishing forging, and thus, sufficient strain can be imparted to the ring molded article 1 to be produced. In addition, it can be prevented that the temperature of the surface regions of the ring-rolled article 5 is reduced according to heat release to the two molds 16, 17, and thus, it can be prevented that crystals of metal structure in the surface regions of the produced ring molded article 1 is coarsened. Accordingly, the ring molded article 1 in which dead metal regions are reduced, can be reliably and efficiently produced. In addition, the excess portions of the ring molded article 1 which is provided in correspondence with the dead metal regions, can be reduced, and thus, near-net-shape forging can be implemented. Furthermore, even if the one side convex portion 1c and the another side convex portion 1d of the ring molded article 1 are offset relative to each other in the radial direction of the ring molded article 1, the ring-rolled article 5 in the form of fluid securely fills into the concave portions 16a, 17a of the two molds 16, 17, and thus, the two convex portions 1c, 1d of the ring molded article 1 can be securely formed.

According to the method for manufacturing the ring molded article 1 in the present Embodiment, the inclination angle θ1 of the one half section of the peripheral wall 3c is within the range of 7 degrees to 40 degrees. Accordingly, since the inclination angle θ1 is 7 degrees or more, in the finishing forging step S4, buckling of the ring-rolled article 5 can be prevented. Furthermore, since the inclination angle θ1 is 40 degrees or less, the size of the rough-forged article 3 can be reduced, and furthermore, in the finishing forging step S4, a phenomenon in which a desired shape cannot be obtained according to unstable finishing forging caused by turning of the ring-rolled article 5 (this phenomenon will hereafter be referred to as "phenomenon of turning of the ring-rolled article 5"), can be prevented. Accordingly, the ring molded article 1 in which the dead metal regions are reduced, can be reliably and efficiently produced.

According to the method for manufacturing the ring molded article 1 in the present Embodiment, the inclination angle θ2 of the ring-rolled article 5 which is placed in the two molds 16, 17, is within the range of 7 degrees to 40 degrees, at the start of the finishing forging and the initial stage of the finishing forging. Accordingly, since the inclination angle θ2 is 7 degrees or more, in the finishing forging step S4, buckling of the ring-rolled article 5 can be prevented. Furthermore, since the inclination angle θ2 is 40 degrees or less, the phenomenon of turning of the ring-rolled article 5 can be prevented. Accordingly, the ring molded article 1 in which the dead metal regions are reduced, can be reliably and efficiently produced.

### Second Embodiment

A method for manufacturing a ring molded article according to a Second Embodiment of the present invention will be described. Basic features of the ring material used for manufacturing the ring molded article according to the present Embodiment are substantially the same as those of the First Embodiment described above. However, the method for manufacturing the ring molded article according to the present Embodiment is different from the method of the First Embodiment in the following.

Although not shown in the drawing, in the ring-rolled article configured as the ring material, a recess section is formed so as to correspond to the outer peripheral side corner of the concave portion in the one side mold. As an example, the recess section may be formed by machine working, such as cutting, press working, or the like, after the ring rolling. In the finishing forging step, this ring-rolled article is supported by the outer peripheral side corner in the concave portion of the one side mold which engages the recess section, and also supported by the inner peripheral side bottom surface and the inner peripheral surface in the opening side concave portion of the another side mold. Furthermore, it is preferable that the ring-rolled article be arranged so as to be apart from regions other than the outer peripheral side corner in the concave portion of the one side mold and the inner peripheral side bottom surface and the inner peripheral surface in the opening side concave portion of the another side mold.

According to the above method for manufacturing the ring molded article in the present Embodiment, in addition to the advantageous effects obtained by the First Embodiment, the following advantageous effects can be obtained. That is to say, since the recess section of the ring-rolled article engages the outer peripheral side corner in the concave portion of the one side mold, the ring-rolled article can be stably supported inside the two molds. Accordingly, the ring-rolled article in which the dead metal regions are reduced can be reliably and efficiently produced.

### Third Embodiment

A method for manufacturing a ring molded article according to a Third Embodiment of the present invention will be described. Basic features of the method for manufacturing the ring molded article are substantially the same as those of the First Embodiment described above. However, the method for manufacturing the ring molded article according to the present Embodiment is different from the method of the First Embodiment in the following.

Although not shown in the drawing, in the ring-rolled article configured as the ring material, recess sections are formed which respectively correspond to an outer peripheral side corner in the concave portion of the one side mold and to an inner peripheral side corner in the concave portion of the another side mold. As an example, the recess sections may be formed by machine working, such as cutting, press working, or the like, after the ring rolling. In the finishing forging step, this ring-rolled article is supported by the outer peripheral side corner in the concave portion of the one side mold which engages the corresponding recess section of the two recess sections, and also supported by the inner peripheral side corner in the concave portion of the another side mold. Furthermore, it is preferable that the ring-rolled article be arranged so as to be apart from regions other than the outer peripheral side corner in the concave portion of the one side mold and the inner peripheral side corner in the opening side concave portion of the another side mold.

According to the above method for manufacturing the ring molded article in the present Embodiment, in addition to the advantageous effects obtained by the First Embodiment, the following advantageous effects can be obtained. That is to say, since the recess sections of the ring-rolled article engage the outer peripheral side corner in the concave potions of the one side mold and the inner peripheral side corner in the concave potions of the another side mold respectively, the ring-rolled article can be stably supported inside the two molds. Accordingly, the ring-rolled article in which the dead metal regions are reduced can be reliably and efficiently produced.

The Embodiments of the present invention are as described above; however, the present invention is not limited to them. More specifically, the present invention can be implemented by various modifications and alterations based on the technical idea of the present invention.

For example, as a modification of the present invention, the following feature may be employed. That is to say, in this feature, if the concave portions 16a, 17a of the two molds 16, 17 which are used in the finishing forging step S4, are offset in the radial direction of the ring molded article 1 so as to correspond to the one side convex portion 1c and the another side convex portion 1d in the ring molded article 1 which are offset in the radial direction, the ring-rolled article 5 can be supported in a condition in which the one half section of the ring-rolled article 5 is not inclined, i.e., in a condition in which the inclination angle θ2 for the one half section is 0 degrees. In this feature, for example, the one half section of the ring-rolled article 5 may be formed in a substantially rectangular shape, and furthermore, an amount of offset between the concave portions 16a, 17a of the two molds 16, 17 in the radial direction of the ring-rolled article 5 may be less than a thickness of the one side surface in the radial direction of the ring-rolled article 5. In this feature, the ring-rolled article 5 can be supported by the outer peripheral side supporting region of the one side mold 16 and the inner peripheral side supporting region of the another side mold 17. If the above feature is employed, the forging can be implemented such that the phenomenon of dead metal is suppressed. However, in view of stable arrangement of the ring-rolled article 5 and freedom of shape of the ring-rolled article 5, it is preferable to employ the feature in which the one half section of the ring-rolled article is inclined.

### EXAMPLE

An EXAMPLE of the present invention will be described. In the present EXAMPLE, the ring molded article 1 to be produced has dimensions with a maximum outer diameter of 1090 mm, a maximum thickness in the radial direction of 120 mm, and a maximum height in the direction of the center axis of 110 mm. In the finishing forging step S4 used for producing this ring molded article 1, the finishing forging step S4 is performed in a plurality of arrangement conditions, respectively, in which the inclination angle θ2 for the inclined one half section of the ring-rolled article 5 is set at 5 degrees, 7 degrees, 10 degrees, 20 degrees, 25 degrees, 30 degrees, 40 degrees, 45 degrees, or 50 degrees. In the forging step for each arrangement condition, it is examined whether buckling of the ring-rolled article 5 occurs. In addition, in the forging step for each arrangement condition, it is examined whether the phenomenon of turning of the ring-rolled article 5 occurs.

As a result of the above examination, in a case in which the inclination angle θ2 is 5 degrees, buckling of the ring-rolled article 5 occurs. In each of cases in which the inclination angles θ2 are 45 degrees and 50 degrees respectively, the phenomenon of turning of the ring-rolled article 5 occurs. On the other hand, in each of cases in which the inclination angles θ2 are 7 degrees, 10 degrees, 20 degrees, 30 degrees, and 40 degrees, respectively, the ring molded article 1 in which dead metal regions are reduced, can be reliably and efficiently produced. In each of cases in which the inclination angles θ2 are 10 degrees, 20 degrees, and 25 degrees respectively, in particular, the ring molded article 1 in which strain appropriate for applying to a material of aircraft turbine disks is sufficiently imparted and the dead metal regions are reduced, can be more reliably and more efficiently produced.

### REFERENCE SIGNS LIST

- 1: Ring molded article
- 1a: Center axis
- 1c: One side convex portion
- 1d: Another side convex portion
- 2: Billet
- 3: Rough-forged article
- 3a: Center axis
- 3b: Bottom
- 3c: Peripheral wall
- 3d: Middle line
- 3e: One side region
- 3f: Another side region
- 3g, 3h: Center of gravity
- 3i: Straight line
- 3j: Parallel line
- 4: Drilled article
- 5: Ring-rolled article (Ring material)
- 5a: Center axis
- 5b: Middle line
- 5c: One side region
- 5d: Another side region
- 5e, 5f: Center of gravity
- 5g: Straight line
- 5h: Parallel line
- 16: One side mold
- 16a: Concave portion
- 16c: Outer peripheral side corner in the concave portion
- 17: Another side mold
- 17a: Concave portion
- 17c: Inner peripheral side corner in the concave portion
- h1, h2: Maximum height
- θ1, θ2: Angle
- S1: Rough forging step (First forging step)
- S2: Drilling step
- S3: Ring rolling step
- S4: Finishing forging step (Second forging step)

## Claims

1. A ring molded article manufacturing method comprising:
a step (S1) of performing first forging on a material (2) such that the material (2) is formed in a shape including a bottom (3b) which is formed in a disk shape, and a peripheral wall (3c) which is inclined to a direction from a center of the bottom (3b) toward an outer periphery thereof, in a direction from an outer periphery of the bottom (3b) toward one side in a direction of a center axis (3a) of the bottom (3b);
a step (S2) of drilling the bottom (3b) of a first forged article (3) obtained by the step (S1) of performing the first forging;
a step (S3) of ring-rolling a drilled article (4) obtained by the step (S2) of drilling; and
a step (S4) of producing a ring molded article (1) in which a ring material (5) obtained by the step (S3) of ring-rolling is placed inside two molds (16, 17), the ring material (5) is then processed by second forging so as to be pressed by the two molds (16, 17) in a direction of a center axis (5a) of the ring material (5), and the ring molded article (1) is thus produced,
the ring molded article manufacturing method charaterised in that
in the step (S1) of performing the first forging, if a one half section of the peripheral wall (3c) is divided into a one side region (3e) and an another side region (3f) in the direction of the center axis (3a) of the first forged article (3) based on a middle (3d) of a maximum height (h1) of the first forged article (3) in the direction of the center axis (3a) of the first forged article (3), a straight line (3i) passing through a center of gravity (3g) of the one side region (3e) and a center of gravity (3h) of the another side region (3f) is inclined by an angle (θ1) relative to the center axis (3a) of the first forged article (3), of which a range is 7 degrees to 40 degrees.

2. The ring molded article manufacturing method according to claim 1, wherein
the ring molded article (1) includes two convex portions (1c, 1d) which respectively protrude on both sides of the ring molded article (1) in a direction of a center axis (1a) thereof and extend in a direction of a circumference of the ring molded article (1),
concave portions (16a, 17a) respectively corresponding to the convex portions (1c, 1d) of the ring molded article (1) are formed on the two molds (16, 17) respectively, and
the ring material (5) placed inside the two molds (16, 17) is supported by a region located on an outer peripheral side from an outer peripheral side corner (16c) in the concave portion (16a) of one (16) of the two molds (16, 17) and a region located on an inner peripheral side from an inner peripheral side corner (17c) in the concave portion (17a) of another (17) of the two molds (16, 17).

3. The ring molded article manufacturing method according to claim 1, wherein
if a one half section of the ring material (5) placed inside the two molds (16, 17) is divided into a one side region (5c) and an other side region (5d) in the direction of the center axis (5a) of the ring material (5) based on a middle (5b) of a maximum height (h2) of the ring material (5) in the direction of the center axis (5a) of the ring material (5), a straight line (5g) passing through a center of gravity (5e) of the one side region (5c) and a center of gravity (5f) of the another side region (5d) is inclined by an angle (θ2) relative to the center axis (5a) of the ring material (5), of which a range is 7 degrees to 40 degrees.

## Patentansprüche

1. Verfahren zur Herstellung eines ringförmigen Artikels, umfassend:
einen Schritt (S1) des Durchführens eines ersten Schmiedens an einem Material (2), sodass das Material (2) in einer Form gebildet wird, die einen Boden (3b) beinhaltet, der in einer Scheibenform gebildet ist, und eine Umfangswand (3c), die in einer Richtung von einer Mitte des Bodens (3b) zu einem Außenumfang davon geneigt ist, in einer Richtung von einem Außenumfang des Bodens (3b) zu einer Seite in einer Richtung einer Mittelachse (3a) des Bodens (3b);
einen Schritt (S2) des Bohrens des Bodens (3b) eines ersten geschmiedeten Artikels (3), der durch den Schritt (S1) des Durchführens des ersten Schmiedens erhalten wird;
einen Schritt (S3) des Ringwalzens eines gebohrten Artikels (4), der durch den Schritt (S2) des Bohrens erhalten wird; und
einen Schritt (S4) des Erzeugens eines ringförmigen Artikels (1), in dem ein Ringmaterial (5), das durch den Schritt (S3) des Ringwalzens erhalten wird, innerhalb von zwei Formen (16, 17) platziert wird, wobei das Ringmaterial (5) dann durch zweites Schmieden verarbeitet wird, um durch die zwei Formen (16, 17) in einer Richtung einer Mittelachse (5a) des Ringmaterials (5) gepresst zu werden, und so der ringförmige Artikel (1) erzeugt wird,
wobei das Verfahren zur Herstellung eines ringförmigen Artikels **dadurch gekennzeichnet ist, dass**
in dem Schritt (S1) des Durchführens des ersten Schmiedens, wenn ein halber Abschnitt der Umfangswand (3c) in einen Seitenbereich (3e) und einen anderen Seitenbereich (3f) in der Richtung der Mittelachse (3a) des ersten geschmiedeten Artikels (3) basierend auf einer Mitte (3d) einer maximalen Höhe (h1) des ersten geschmiedeten Artikels (3) in der Richtung der Mittelachse (3a) des ersten geschmiedeten Artikels (3) geteilt wird, eine Gerade (3i), die durch einen Schwerpunkt (3g) des einen Seitenbereichs (3e) und einen Schwerpunkt (3h) des anderen Seitenbereichs (3f) verläuft, um einen Winkel (θ1) relativ zu der Mittelachse (3a) des ersten geschmiedeten Artikels (3) geneigt ist, dessen Bereich 7 Grad bis 40 Grad ist.

2. Verfahren zur Herstellung eines ringförmigen Artikels nach Anspruch 1, wobei
der ringförmige Artikel (1) zwei konvexe Abschnitte (1c, 1d) beinhaltet, die jeweils auf beiden Seiten des ringförmigen Artikels (1) in einer Richtung einer Mittelachse (1a) davon vorstehen und sich in einer Richtung eines Umfangs des ringförmigen Artikels (1) erstrecken,
konkave Abschnitte (16a, 17a), die jeweils den konvexen Abschnitten (1c, 1d) des ringförmigen Artikels (1) entsprechen, werden jeweils auf den zwei Formen (16, 17) gebildet, und
das Ringmaterial (5), das innerhalb der zwei Formen (16, 17) platziert ist, von einem Bereich getragen wird, der sich an einer Außenumfangsseite von einer Außenumfangsseitenecke (16c) in dem konkaven Abschnitt (16a) von einem (16) der zwei Formen (16, 17) befindet, und einem Bereich, der sich an einer Innenumfangsseite von einer Innenumfangsseitenecke (17c) in dem konkaven Abschnitt (17a) von einer anderen (17) der zwei Formen (16, 17) befindet.

3. Verfahren zur Herstellung eines ringförmigen Artikels nach Anspruch 1, wobei,
wenn ein halber Abschnitt des Ringmaterials (5), das innerhalb der zwei Formen (16, 17) platziert ist, in einen Seitenbereich (5c) und einen anderen Seitenbereich (5d) in der Richtung der Mittelachse (5a) des Ringmaterials (5) basierend auf einer Mitte (5b) einer maximalen Höhe (h2) des Ringmaterials (5) in der Richtung der Mittelachse (5a) des Ringmaterials (5) geteilt wird, eine Gerade (5g), die durch einen Schwerpunkt (5e) des einen Seitenbereichs (5c) und einen Schwerpunkt (5f) des anderen Seitenbereichs (5d) verläuft, um einen Winkel (θ2) relativ zu der Mittelachse (5a) des Ringmaterials (5) geneigt ist, dessen Bereich 7 Grad bis 40 Grad ist.

## Revendications

1. Procédé de fabrication d'articles moulés annulaires comprenant :
une étape (S1) d'exécution d'un premier forgeage sur un matériau (2), de telle sorte que le matériau (2) soit formé sous une forme comprenant un fond (3b) qui est formé sous une forme de disque, et une paroi périphérique (3c) qui est inclinée dans une direction depuis un centre du fond (3b) vers une périphérie externe de celui-ci, dans une direction depuis une périphérie externe du fond (3b) vers un côté dans la direction d'un axe central (3a) du fond (3b) ;
une étape (S2) de perçage du fond (3b) d'un premier article forgé (3) obtenu par l'étape (S1) d'exécution du premier forgeage ;
une étape (S3) de laminage annulaire d'un article percé (4) obtenu par l'étape (S2) de perçage ; et
une étape (S4) de production d'un article moulé annulaire (1) dans lequel un matériau annulaire (5) obtenu par l'étape (S3) de laminage annulaire est placé à l'intérieur de deux moules (16, 17), le matériau annulaire (5) est ensuite traité par un second forgeage de manière à être pressé par les deux moules (16, 17) dans une direction d'un axe central (5a) du matériau annulaire (5), et l'article moulé annulaire (1) est ainsi produit,
le procédé de fabrication d'articles moulés annulaires étant **caractérisé en ce que**
dans l'étape (S1) de réalisation du premier forgeage, si une demi-section de la paroi périphérique (3c) est divisée en une région latérale (3e) et une autre région latérale (3f) dans la direction de l'axe central (3a) du premier article forgé (3) sur la base d'un milieu (3d) d'une hauteur maximale (h1) du premier article forgé (3) dans la direction de l'axe central (3a) du premier article forgé (3), une ligne droite (3i) passant par un centre de gravité (3g) d'une région latérale (3e) et un centre de gravité (3h) de l'autre région latérale (3f) est inclinée selon un angle (θ1) par rapport à l'axe central (3a) du premier article forgé (3), dont une plage est de 7 degrés à 40 degrés.

2. Procédé de fabrication d'articles moulés annulaires selon la revendication 1, dans lequel
l'article moulé annulaire (1) comprend deux parties convexes (le, 1d) qui font respectivement saillie des deux côtés de l'article moulé annulaire (1) dans une direction d'un axe central (1a) de celui-ci et s'étendent dans une direction d'une circonférence de l'article moulé annulaire (1),
des parties concaves (16a, 17a) correspondant respectivement aux parties convexes (le, 1d) de l'article moulé annulaire (1) sont formées sur les deux moules (16, 17) respectivement, et
le matériau annulaire (5) placé à l'intérieur des deux moules (16, 17) est supporté par une région située sur un côté périphérique extérieur à partir d'un coin latéral périphérique extérieur (16c) dans la partie concave (16a) de l'un (16) des deux moules (16, 17) et une région située sur un côté périphérique intérieur à partir d'un coin latéral périphérique intérieur (17c) dans la partie concave (17a) d'un autre (17) des deux moules (16, 17).

3. Procédé de fabrication d'articles moulés annulaires selon la revendication 1, dans lequel
si une demi-section du matériau annulaire (5) placé à l'intérieur des deux moules (16, 17) est divisée en une région latérale (5c) et une autre région latérale (5d) dans la direction de l'axe central (5a) du matériau annulaire (5) sur la base d'un milieu (5b) d'une hauteur maximale (h2) du matériau annulaire (5) dans la direction de l'axe central (5a) du matériau annulaire (5), une ligne droite (5g) passant par un centre de gravité (5e) d'une région latérale (5c) et un centre de gravité (5f) de l'autre région latérale (5d) est inclinée selon un angle (θ2) par rapport à l'axe central (5a) du matériau annulaire (5), dont une plage est de 7 degrés à 40 degrés.
